# EUROPÄISCHE PATENTSCHRIFT

(11) **EP 3 436 229 B1**
(45) Veröffentlichungstag und Bekanntmachung des Hinweises auf die Patenterteilung: **15.07.2020**
(21) Anmeldenummer: 17713256.0
(22) Anmeldetag: 23.03.2017
(51) Int. Cl.: B29C 44/58, B29C 33/20, B29C 45/14, B29C 33/00

(54) **VORRICHTUNG UND VERFAHREN ZUM BEARBEITEN EINES PLATTENFÖRMIGEN WERKSTÜCKS FÜR EIN KRAFTFAHRZEUG**
DEVICE AND METHOD FOR MACHINING A PLATE-SHAPED WORKPIECE FOR A MOTOR VEHICLE
DISPOSITIF ET PROCÉDÉ POUR USINER UNE PIÈCE EN FORME DE PLAQUE POUR VÉHICULE AUTOMOBILE

(30) Priorität: 31.03.2016 DE 102016105900
(43) Veröffentlichungstag der Anmeldung: 06.02.2019
(73) Patentinhaber: Webasto SE, 82131 Stockdorf (DE)
(72) Erfinder: SEEBASS, Martin, 82131 Stockdorf (DE); THOMAS, Claus, 31249 Hohenhameln - Mehrum (DE); HATTENDORF, Heiko, 31275 Lehrte (DE)
(74) Vertreter: Epping - Hermann - Fischer
(86) Internationale Anmeldenummer: PCT/EP2017/056948
(87) Internationale Veröffentlichungsnummer: WO 2017/167641

(56) Entgegenhaltungen:
- EP-A1- 2 799 201
- WO-A1-2008/025561
- US-A- 5 238 387

## Beschreibung

Bei Verfahren zum Bearbeiten eines plattenförmigen Werkstücks sind spezielle Werkzeuge erforderlich, die den gewünschten Bearbeitungsvorgang ermöglichen. Beispielsweise wird beim Herstellen und Anbringen einer Umschäumung an Scheiben für Kraftfahrzeuge die zu bearbeitende Scheibe mittels spezieller Formwerkzeuge behandelt und die Umschäumung am Rand der Scheibe ausgebildet. Auf diese Weise ist es möglich, Bauteile mit der Scheibe zu verbinden und auch ein Anbinden der Scheibe an einer Karosserie eines Kraftfahrzeugs vorzubereiten.

Ein dafür benötigtes spezielles Form- oder Schäumwerkzeug weist in der Regel zwei Werkzeughälften auf, die als Ober-und Unterteil aufeinander abgestimmt sind und ein Ausbilden von Umschäumungen ermöglichen. Dabei müssen die Werkzeughälften in jeweiligen Formträgern gehalten und bewegbar sein, um ein gewünschtes Ausbilden von Umschäumen zu ermöglichen. Ein solches Ausbilden einer Umschäumung ist zum Beispiel in dem Dokument EP 0355209 B1 beschrieben.

Die Druckschrift US 5 238 387 A offenbart eine Vorrichtung zum Ausbilden eines Produkts aus Kunstharz mittels Spritzgießens, welche eine Formanordnung mit einer Düsenplatte und einem ersten und einem zweiten Formwerkzeug aufweist, die eine dazwischen liegende Kavität definieren. Das erste Formwerkzeug weist ein Element auf, das an der Düsenplatte befestigt ist und ein Unterwerkzeug ausbildet. Im Zusammenwirken mit dem zweiten Formelement, welches ein Oberwerkzeug ausbildet und weiteren Elementen kann das Formwerkzeug geschlossen und ein Produkt aus Kunstharz ausgeformt werden.

In dem Dokument EP 2 799 201 A1 ist eine Gießform zum Herstellen einer Plattenanordnung beschrieben, das eine Platte und eine Dichtung umfasst, wobei die Dichtung an die Platte geklebt ist und sich entlang mindestens eines Abschnitts ihres Umfangs erstreckt. Die Gießform weist einen ersten Formteil und einen zweiten Formteil auf, die einen geschlossenen Hohlraum ausbilden können. Der zweite Formteil weist eine elastische Lippe auf, die sich entlang einer Peripherie erstreckt und die von einer Applikatorvorrichtung angehoben werden kann, um einen Zugang zu dem geschlossenen Hohlraum bereitzustellen.

Es ist eine Aufgabe, die der Erfindung zugrunde liegt, eine Vorrichtung und ein Verfahren zum Bearbeiten eines plattenförmigen Werkstücks für ein Kraftfahrzeug zu schaffen, die dazu geeignet sind, eine zeitsparende und kostengünstige Konstruktion eines Fahrzeugdachs zu ermöglichen.

Die Aufgabe wird durch die Merkmale der unabhängigen Patentansprüche gelöst.

Eine erfindungsgemäße Vorrichtung zum Bearbeiten eines plattenförmigen Werkstücks für ein Kraftfahrzeug umfasst ein Unterwerkzeug mit einem Haltebereich für das Werkstück und ein Klappelement, das einen Haltebereich für das Werkstück aufweist und das relativ zum Unterwerkzeug bewegbar ist. Das Klappelement kann mittels einer translatorischen Bewegung relativ zu dem Unterwerkzeug von einem ersten Zustand in einen zweiten Zustand wechseln und eine erste Kavität zwischen dem Haltebereich des Klappelements und dem Werkstück ausbilden. Dabei erfolgt die translatorische Bewegung des Klappelements überwiegend in einer ersten Richtung, die parallel zu einer Haupterstreckungsebene des plattenförmigen Werkstücks ist.

Ist das Werkstück beispielsweise im Wesentlichen parallel zu einem Untergrund ausgerichtet, so erstreckt es sich überwiegend in einer horizontalen Ebene und die translatorische Bewegung des Klappelements erfolgt größtenteils in dieser Ebene. Zum Beispiel wird das Klappelement horizontal seitlich an das Werkstück herangefahren, um dann an einer vorgegebenen Position in Kontakt mit dem Werkstück die erste Kavität auszubilden. Das Ausbilden eines zuverlässigen und sicheren Kontakts erfolgt beispielsweise mittels eines vertikalen Absetzens des Klappelements auf dem Werkstück. Dabei ist eine solche vertikale Bewegung relativ zu dem Werkstück und dem Unterwerkzeug signifikant geringer ausgeprägt als die zuvor beschriebene horizontale Bewegung.

Anders formuliert ist es im Rahmen einer solchen translatorischen Bewegung möglich, das Klappelement über eine erste Distanz entlang der ersten, horizontalen Richtung und über eine zweite Distanz entlang einer zweiten, vertikalen Richtung zu verfahren, wobei die erste Distanz gegenüber der zweiten überwiegt. Beispielsweise entspricht die zweite Distanz weniger als 50 % der ersten Distanz. In anderen Ausgestaltungen der Vorrichtung entspricht die zweite Distanz weniger als 10% der ersten Distanz.

Die Vorrichtung kann insbesondere mehrere separate Klappelemente aufweisen, die, wie zuvor beschrieben, an das zu bearbeitende Werkstück horizontal herangefahren werden können, sodass beispielsweise gegenüberliegende Klappelemente translatorisch aufeinander zu verfahren werden bis eine jeweilige vorgegebene Position relativ zum Werkstück oder dem Unterwerkzeug erreicht ist, um eine oder mehrere vorgesehene Kavitäten auszubilden.

Eine weitere erfindungsgemäße Vorrichtung zum Bearbeiten eines plattenförmigen Werkstücks für ein Kraftfahrzeug umfasst ein Unterwerkzeug mit einem Haltebereich für das Werkstück und ein Klappelement, das einen Haltebereich für das Werkstück aufweist und das um eine erste Achse schwenkbar ist. Das Klappelement kann mittels Umklappen um die erste Achse von einem ersten Zustand in einen zweiten Zustand wechseln und eine erste Kavität zwischen dem Haltebereich des Klappelements und dem Werkstück ausbilden.

Gemäß einer solchen Vorrichtung erfolgt eine wesentliche Relativbewegung des Klappelements zu dem Werkstück beziehungsweise dem Unterwerkzeug in Form einer Schwenkbewegung um die erste Achse. Auf diese Weise kann eine platzsparende Vorrichtung zum Bearbeiten eines plattenförmigen Werkstücks realisiert werden, ohne wesentliche translatorische Bewegungen des Klappelements zu benötigen. Darüber hinaus ist aber insbesondere auch eine Kombination einer solchen Vorrichtung mit den Eigenschaften der zuvor beschriebenen Vorrichtung möglich, sodass das Klappelement translatorisch verfahrbar und außerdem schwenkbar ausgebildet ist. Eine solche Vorrichtung beinhaltet zusätzliche Freiheitsgrade beim Bearbeiten des Werkstücks und kann somit zu einem zuverlässigen und sicheren Bearbeitungsprozess beitragen.

Mittels der beschriebenen Vorrichtungen ist ein Werkzeug zum Bearbeiten eines plattenförmigen Werkstücks für ein Kraftfahrzeug realisierbar, welches zu einem kostengünstigen und zeitsparenden Bearbeiten des Werkstücks beitragen kann. Insbesondere sind mittels der beschriebenen Vorrichtung Umschäumungs- und Klebeprozesse ohne Maschinenwechsel möglich, sodass unter anderem ein Beitrag zu einer aufwandsarmen und kostengünstigen Konstruktion eines Fahrzeugdachs geleistet wird.

Die beschriebene Vorrichtung ermöglicht es sowohl eine durchgehende als auch nicht durchgehende Umschäumungen am Rand von Scheiben für Kraftfahrzeuge auszubilden. Die Vorrichtung realisiert somit ein Formwerkzeug ohne Oberwerkzeug, sodass ein Zugang an einer Oberseite des Werkstücks frei zugänglich ist, um zeitgleich oder zeitnah nachfolgende oder vorhergehende Bearbeitungsschritte des plattenförmigen Werkstücks zu ermöglichen. In diesem Zusammenhang wird darauf hingewiesen, dass Begriffe wie "oben" und "Oberseite" beziehungsweise "Oberwerkzeug" und "Unterwerkzeug" auf eine im Wesentlichen vertikale Richtung senkrecht zu einer Oberfläche des Werkstücks oder eines Untergrunds für die Vorrichtung bezogen sind.

Beispielsweise kann das zu bearbeitende Werkstück mittels der Vorrichtung an einem Rand umschäumt und in dem Innenbereich mittels eines Klebeprozesses bearbeitet werden, ohne dass ein aufwendiger und zeitintensiver Maschinenwechsel erforderlich ist. Aufgrund dieser "offenen" Konstruktion der Vorrichtung werden zusätzliche Freiheitsgrade beim Bearbeiten des plattenförmigen Werkstücks ermöglicht.

Das plattenförmige Werkstück ist zum Beispiel als Blech oder als Glasdeckel, Seitenscheibe, Windschutzschutzscheibe, Heckscheibe oder Heckscheibenklappe für ein Kraftfahrzeug realisiert, welches mittels der Vorrichtung beispielsweise an vorgegebenen Positionen zuverlässig umschäumt werden kann, während eine Oberseite des jeweiligen Werkstücks für weitere Bearbeitungsschritte zur Verfügung steht. Zum Beispiel kann mittels Umklappen und/oder translatorischen Verfahrens des oder der Klappelemente ein Rand einer Scheibe für ein Kraftfahrzeug umschäumt werden und gleichzeitig oder zeitnah nach oder vor dem Umschäumen an einer Oberseite der jeweiligen Scheibe anzubringende Anbauelemente verklebt werden.

Auf diese Weise ermöglicht die beschriebene Vorrichtung ein zuverlässiges und zeitsparendes Bearbeiten von Scheiben und anderweitig plattenförmigen Werkstücken für ein Kraftfahrzeug und trägt zu einer kostengünstigen Konstruktion von Kraftfahrzeugkomponenten bei.

Dadurch, dass auf ein separates Oberwerkzeug, wie beispielsweise eine mit Ausnehmungen versehene Platte und ein zugehöriger Formträger, verzichtet werden kann, ist mittels der beschriebenen Vorrichtung ein übersichtliches und platzsparendes Werkzeug zum Bearbeiten von plattenförmigen Werkstücken realisierbar. Im Vergleich zu Werkzeugen, die ein Oberteil benötigen, trägt die Vorrichtung außerdem zu einer Material- und Gewichtsersparnis bei, was sich wiederum vorteilhaft auf die Kosten bei der Konstruktion einer solchen Vorrichtung auswirkt.

Die beschriebene Vorrichtung kann ohne Oberwerkzeug hinsichtlich ihrer Struktur und ihres Aufbaus vereinfacht und besonders platzsparend ausgestaltet werden. Begründet durch den eingesparten Bauraum und das reduzierte Gewicht, welches ein Oberwerkzeug inklusive Formträger und Gestell mit sich bringen würde, wird das Unterwerkzeug entlastet und muss bei einem Bearbeitungsvorgang weniger Gewicht halten und bewegen können. Somit ermöglicht die beschriebene Vorrichtung zusätzliche Vereinfachungen in Bezug auf Ansteuerung und Mobilität der zusammenwirkenden Komponenten. Die für die Bewegung des Unterwerkzeugs benötigten Kräfte können entsprechend reduziert werden, sodass ein Beitrag zu einem energie- und kosteneffizienten Bearbeiten eines plattenförmigen Werkstücks geleistet wird.

Das Klappelement ist so ausgestaltet, dass es in dem ersten Zustand geöffnet und bereit für die Aufnahme eines zu bearbeitenden Werkstücks ist und in dem zweiten umgeklappten und/oder translatorisch verfahrenen Zustand im Zusammenwirken mit dem Formkörper des Unterwerkzeugs und dem eingespannten Werkstück eine erste vorgegebene Kavität ausbildet. Eine solche erste Kavität kann zum Beispiel durchgehend ausgebildet sein und sich wie ein Hohlrahmen an und um den Rand des Werkstücks erstrecken oder die erste Kavität bildet eine Mehrzahl von einzelnen, zueinander beabstandeten Kavitäten aus, sodass mittels Auffüllen der ersten Kavität mit einem dafür vorgesehenen Material ein durchgehender, einstückiger Rahmen oder eine vorgegebene Anzahl von einzelnen, separaten Kunststoffformteilen ausgebildet werden kann.

Das Klappelement umfasst mindestens eine umklappbare und/oder translatorisch verfahrbare Komponente zum Ausbilden der ersten Kavität. Gegebenenfalls sind auch mehrere umklappbare und/oder translatorisch verfahrbare Komponenten zum Ausbilden weiterer Kavitäten vorhanden. Darüber hinaus kann die Vorrichtung auch mehrere zueinander separate Klappelemente aufweisen, sodass beispielsweise an jedem seitlichen Rand eines im Wesentlichen rechteckigen Werkstücks ein Klappelement vorgesehen ist, welche beispielsweise in dem jeweiligen zweiten, umgeklappten und/oder translatorisch verfahrenen Zustand eine Art Rahmen um das Werkstücks bilden und somit ein Ausbilden des Kunststoffformteils in Gestalt einer durchgehenden Umrandung ermöglichen. Direkt benachbarte Klappelemente und Komponenten sind nutzbringender Weise aufeinander abgestimmt, sodass ein zuverlässiges Ausbilden einer durchgehenden Kavität und eines einstückigen Kunststoffformteils mit gewünschter Kontur möglich ist.

Insbesondere können mit der beschriebenen Vorrichtung auch steile Konturen des Kunststoffformteils ausgebildet werden, wie sie gegebenenfalls bei Außenblenden gewünscht sind. Auch Kontursprünge des Kunststoffformteils sind ausbildbar und können mittels des Klappelements und des Unterwerkzeugs der Vorrichtung auf einfache und zuverlässige Weise realisiert werden. Das Klappelement und der damit zusammenwirkende Formkörper des Unterwerkzeugs sind hinsichtlich der auszubildenden Geometrie der Kavität und folglich auch hinsichtlich der auszubildenden Geometrie des Kunststoffformteils aufeinander abgestimmt und ermöglichen es, auch steile und schmale Konturen zu realisieren.

Gemäß einer Weiterbildung der Vorrichtung umfasst das Unterwerkzeug einen Formkörper, welcher den Haltebereich des Unterwerkzeugs für das Werkstück aufweist, sodass die erste Kavität zwischen dem Haltebereich des Formkörpers, dem Haltebereich des Klappelements und dem Werkstück ausbildbar ist. Eine solche Weiterbildung der Vorrichtung ermöglicht insbesondere ein kontrolliertes und sicheres Bearbeiten eines Randes des Werkstücks, welcher durch den Formkörper und das Klappelement in dem zweiten Zustand zuverlässig umschlossen ist.

In der weiteren Beschreibung wird im Wesentlichen auf Weiterbildungen der Vorrichtung eingegangen, bei der das Klappelement um eine erste und gegebenenfalls auch weitere Achsen schwenkbar ist und das Ausbilden der ersten und gegebenenfalls weiterer Kavitäten mittels Umklappen des Klappelements und gegebenenfalls zugehöriger Komponenten erfolgt. Sämtliche offenbarten Merkmale und Eigenschaften sind aber auch für die entsprechenden Elemente bei einer translatorischen Relativbewegung des Klappelements offenbart, sofern sie sich nicht ausdrücklich auf die Fähigkeit des Umklappens des Klappelements beziehen.

Gemäß einer Weiterbildung der Vorrichtung weist das Klappelement eine erste und eine zweite Komponente auf, wobei die erste Komponente um die erste Achse und die zweite Komponente um eine zweite Achse schwenkbar ist. In einem umgeklappten, zweiten Zustand der ersten Komponente um die erste Achse ist die erste Kavität zwischen dem Formträger, der ersten Komponente und dem Werkstück ausgebildet. In einem umgeklappten, zweiten Zustand der zweiten Komponente um die zweite Achse ist eine zweite Kavität zwischen der ersten Komponente, der zweiten Komponente und dem Werkstück ausgebildet.

Die beiden Komponenten können unabhängig voneinander angesteuert werden, sodass beispielsweise das zu bearbeitende Werkstück vorgegeben auf dem Formkörper des Unterwerkzeugs positioniert wird und mittels Umklappen des Klappelements die erste Kavität oder die erste und zweite Kavität ausgebildet wird. Das Ausbilden der ersten Kavität kann zum Beispiel dadurch erfolgen, dass die erste Komponente um die erste Achse umklappt und somit von dem ersten in den zweiten Zustand wechselt und nachfolgend das Werkstück mit dem Formkörper kontrolliert an die umgeklappte erste Komponente herangeführt wird. Alternativ kann das Werkstück mit dem Formkörper vorgegeben positioniert werden, sodass nachfolgend die erste Komponente umklappt und die erste Kavität abdichtet beziehungsweise ausbildet. Das Ausbilden der zweiten Kavität kann analog mittels Umklappen der zweiten Komponente um die zweite Achse erfolgen und unabhängig von dem Ausbilden der ersten Kavität durchgeführt werden.

Auf diese Weise können mittels Einbringen von vorgegebenem Material ein erstes und ein zweites Kunststoffformteil unabhängig voneinander ausgebildet werden. Beispielsweise wird das erste Kunststoffformteil als äußere, umlaufende Umschäumung ausgebildet, während das zweite Kunststoffformteil einen innenliegenden Rahmen realisiert. Beispielsweise ist das erste und/oder zweite Kunststoffformteil aus Polyurethan ausgebildet. Alternativ sind auch andere thermoplastische Kunststoffe oder Materialien denkbar, die mittels Einbringen in die jeweilige Kavität ein Ausbilden des ersten und/oder zweiten Kunststoffformteils ermöglichen.

Alternativ oder zusätzlich zu der zweiten Komponente, kann das Klappelement auch eine Komponente umfassen, welche mittels einer translatorischen Bewegung relativ zu dem Werkstück beziehungsweise dem Unterwerkzeug bewegbar ist, um ein kontrolliertes Ausbilden einer weiteren Kavität und/oder ein zuverlässiges und sicheres Positionieren anzuklebender Anbauelemente zu ermöglichen. Beispielsweise ist die zweite Komponente als Zylinder- oder Spannelement realisiert, welches, zum Beispiel horizontal und/oder vertikal, vorgegeben verfahren oder betätigt werden kann, um ein Ausbilden der zweiten Kavität und/oder ein vorgegebenes Positionieren von Anbauelementen auf dem Werkstück zu ermöglichen.

Die erste und zweite Achse, um die die jeweilige Komponente umklappen und von dem ersten in den zweiten Zustand wechseln kann, sind beispielsweise parallel zu einer wesentlichen Erstreckungsebene des plattenförmigen Werkstücks orientiert. In weiteren Ausführungsformen der Vorrichtung können die Achsen auch senkrecht oder anderweitig zu der wesentlichen Erstreckungsebene des plattenförmigen Werkstücks orientiert sein. Darüber hinaus müssen die erste und zweite Achse eines Klappelements nicht zwangsläufig gleich orientiert sein, sodass anwendungsbedingt eine andere Art der Achsenorientierung und somit des Umklappens der jeweiligen Komponente nutzbringend sein kann. Außerdem kann das mindestens eine Klappelement auch mehr als zwei Komponenten aufweisen, sodass weitere Kavitäten auf die beschriebene Weise ausbildbar sind.

Gemäß einer Weiterbildung der Vorrichtung weist der Formkörper und/oder das Klappelement im Bereich der ausbildbaren ersten Kavität jeweils eine vorgegebene erste Begrenzungsfläche auf, die Silikon und/oder Aluminium und/oder Stahl und/oder Kunststoff aufweist. Alternativ oder zusätzlich umfasst das Klappelement eine oder mehrere zweite Begrenzungsflächen, welche Silikon und/oder Aluminium und/oder Stahl aufweisen und in dem zweiten Zustand der zweiten Komponente die zweite Kavität ausbilden. Die zweite Kavität wird insbesondere durch die erste und zweite Komponente ausgebildet, sodass die zweite Begrenzungsfläche des Klappelements zumindest teilweise an einer Oberfläche der ersten und teilweise an einer Oberfläche der zweiten Komponente ausgebildet ist.

Auf diese Weise wird mittels der beschriebenen Vorrichtung ein zuverlässiges und sicheres Ausbilden des ersten und/oder zweiten Kunststoffformteils ermöglicht. Die Begrenzungsflächen bilden eine vorgegebene äußere Form der jeweiligen Kavität aus und sind nutzbringend an das einzuspeisende Material und das auszubildende Kunststoffformteil angepasst, sodass sich dieses nach dem Ausbilden zum Beispiel rückstandsfrei von dem Klappelement und dem Formkörper lösen lässt.

Gemäß einer Weiterbildung der Vorrichtung umfasst die Vorrichtung einen ersten Materialspender, der relativ zu dem Unterwerkzeug bewegbar ist und der zum Einbringen eines vorgegebenen Materials in die ausbildbare erste und/oder zweite Kavität ausgebildet ist, um ein erstes und/oder zweites Kunststoffformteil auszubilden. Gegebenenfalls ermöglicht die beschriebene Vorrichtung auch das Ausbilden weiterer Kavitäten, beispielsweise mittels weiterer Komponenten des Klappelements, die mittels des Materialspenders ausgefüllt werden können. Ein solcher Materialspender ist beispielsweise als Mischkopf realisiert, welcher an vorgegebenen Positionen Material in die ausgebildete erste und/oder zweite Kavität und/oder weitere Kavitäten einbringen kann. Im Rahmen eines Spritzgussprozesses kann somit das erste und/oder zweite Kunststoffformteil ausbildet werden.

Gemäß einer Weiterbildung umfasst die Vorrichtung einen zweiten Materialspender, der relativ zu dem Unterwerkzeug bewegbar ist und der zum Aufspenden eines vorgegebenen Materials auf das Werkstück ausgebildet ist, um ein Anbauelement an dem Werkstück anzuordnen. Ein solcher zweiter Materialspender kann insbesondere einen Mischkopf zum Verkleben von Anbauelementen realisieren, um zusätzlich zu dem ersten Materialspender einen weiteren Bearbeitungsschritt zeitgleich oder zeitnah zum Ausbilden des oder der Kunststoffformteile zu ermöglichen. Mittels des zweiten Materialspenders können zum Beispiel im Innenbereich des Werkstücks Anbauelemente punktuell angeklebt werden.

Alternativ oder zusätzlich kann der erste Materialspender auch für einen Klebevorgang ausgebildet sein, sodass beispielsweise lediglich ein Materialspender benötigt wird, um ein Umschäumen und Verkleben zu ermöglichen und ein besonders übersichtliches Formwerkzeug mittels der beschriebenen Vorrichtung zu realisieren. Zum Beispiel weist der jeweilige Materialspender verschiedene Zuleitungen auf, durch die die vorgegebenen Materialien eingespeist und/oder aufgetragen werden können. Darüber hinaus kann der zweite Materialspender auch dazu befähigt sein, vorgegebenes Material zum Ausbilden des ersten und/oder zweiten Kunststoffformteils in die jeweilige Kavität einzuspeisen oder auch separate Umschäumungskonturen herzustellen. Die Vorrichtung kann darüber hinaus noch weitere Materialspender oder Mischköpfe umfassen, die zu einer kürzeren Bearbeitungszeit des plattenförmigen Werkstücks beitragen können.

Gemäß einer Weiterbildung der Vorrichtung weisen der Formkörper und/oder das Klappelement ein Heizelement zum Temperieren des Formkörpers und/oder des Klappelements auf. Auf diese Weise wird die Vorrichtung als Formwerkzeug dahingehend erweitert, dass der Formkörper und/oder das Klappelement, insbesondere im Bereich der auszubildenden ersten und/oder zweiten Kavität, vorgegeben temperiert werden können. Im Rahmen des Ausbildens des ersten und/oder zweiten Kunststoffformteils können die jeweiligen Komponenten auf eine vorgegebene Bearbeitungstemperatur erhitzt werden, um ein zuverlässiges und sicheres Ausbilden der Kunststoffformteile zu ermöglichen. Die Heizelemente ermöglichen somit zum Beispiel ein Anpassen der Temperatur der jeweiligen Kavität beziehungsweise der zugehörigen Begrenzungsflächen an eine vorgegebene Bearbeitungstemperatur.

Ein erfindungsgemäßes Verfahren zum Bearbeiten eines plattenförmigen Werkstücks für ein Kraftfahrzeug umfasst ein Bereitstellen des Werkstücks sowie ein Bereitstellen eines Unterwerkzeugs mit einem Haltebereich für das Werkstück und ein Bereitstellen eines Klappelements, welches relativ zu dem Unterwerkzeug bewegbar ist. Das Verfahren umfasst weiter ein Positionieren des Werkstücks und des Unterwerkzeugs zueinander und ein translatorisches Bewegen des Klappelements relativ zu dem Unterwerkzeug ausgehend von einem ersten Zustand in einen zweiten Zustand und dadurch Anordnen des Klappelements an und/oder auf dem Werkstück. Das Klappelement und das Werkstück werden so zueinander angeordnet und kontaktiert, dass eine erste Kavität zwischen dem Klappelement und dem Werkstück ausgebildet wird. Das Verfahren umfasst weiter ein Einbringen eines vorgegebenen Materials in die erste Kavität und dadurch Ausbilden eines ersten Kunststoffformteils.

Ein weiteres erfindungsgemäßes Verfahren zum Bearbeiten eines plattenförmigen Werkstücks für ein Kraftfahrzeug umfasst ein Bereitstellen des Werkstücks sowie ein Bereitstellen eines Unterwerkzeugs mit einem Haltebereich für das Werkstück und ein Bereitstellen eines Klappelements, welches relativ zu dem Unterwerkzeug um eine erste Achse schwenkbar ist. Das Verfahren umfasst weiter ein Positionieren des Werkstücks und des Unterwerkzeugs zueinander und ein Umklappen des Klappelements um die erste Achse ausgehend von einem ersten Zustand in einen zweiten Zustand und dadurch Anordnen des Klappelements an und/oder auf dem Werkstück. Das Klappelement und das Werkstück werden so zueinander angeordnet und kontaktiert, dass eine erste Kavität zwischen dem Klappelement und dem Werkstück ausgebildet wird. Das Verfahren umfasst weiter ein Einbringen eines vorgegebenen Materials in die erste Kavität und dadurch Ausbilden eines ersten Kunststoffformteils.

Mittels der beschriebenen Verfahren ist jeweils ein kostengünstiges und zeitsparendes Bearbeiten eines plattenförmigen Werkstücks für ein Kraftfahrzeug möglich. Das Verfahren umfasst insbesondere eine Verwendung einer der zuvor beschriebenen Vorrichtungen als spezielles Formwerkzeug zum Bearbeiten eines jeweiligen Werkstücks, sodass sämtliche Merkmale und Eigenschaften der zuvor beschriebenen Vorrichtungen auch für das korrespondierende Verfahren offenbart sind und umgekehrt.

Insbesondere wird darauf hingewiesen, dass ein solches Verfahren zum Bearbeiten eines plattenförmigen Werkstücks für ein Kraftfahrzeug einen Einsatz eines oder mehrerer Klappelemente umfassen kann, welche translatorisch, insbesondere horizontal, bewegbar und/oder schwenkbar ausgebildet sind, um vorgesehene Kavitäten und/oder vorgegebene Positionen für Anbauelemente auszubilden.

Außerdem wird darauf hingewiesen, dass die zuvor beschriebenen Vorrichtungen sowie die korrespondierenden Verfahren auf einer gemeinsamen erfinderischen Idee beruhen, die ein zuverlässiges und zeitsparendes Bearbeiten des plattenförmigen Werkstücks ermöglicht. Insbesondere wird ein solches effizientes Bearbeiten durch das translatorisch bewegbare und/oder schwenkbare Klappelement ermöglicht.

In der weiteren Beschreibung wird im Wesentlichen auf Weiterbildungen des Verfahrens eingegangen, bei der das Klappelement um eine erste und gegebenenfalls auch weitere Achsen schwenkbar ist und das Ausbilden der ersten und gegebenenfalls weiterer Kavitäten mittels Umklappen des Klappelements und gegebenenfalls zugehöriger Komponenten erfolgt. Sämtliche offenbarten Merkmale und Eigenschaften sind aber auch für die entsprechenden Elemente bei einer translatorischen Relativbewegung des Klappelements offenbart, sofern sie sich nicht ausdrücklich auf die Fähigkeit des Umklappens des Klappelements beziehen.

Gemäß einer Weiterbildung des Verfahrens umfasst das Positionieren des Werkstücks und des Formkörpers zueinander ein Auflegen des Werkstücks auf einem Halteelement des Unterwerkzeugs.

Gemäß einer Weiterbildung des Verfahrens umfasst das Positionieren des Werkstücks und des Formkörpers zueinander ein Verschieben des Werkstücks relativ zum Formkörper mittels eines Stempelelements des Unterwerkzeugs. Ein solches Stempelelement ist zum Beispiel als Zylinder- oder Hebelelement realisiert, um ein zuverlässiges und sicheres Positionieren des Werkstücks zu ermöglichen.

Mittels dieser Weiterbildungen des Verfahrens und der korrespondierenden Vorrichtung kann das zu bearbeitende Werkstück auf einfache und zuverlässige Weise vorgegeben positioniert werden. Mittels eines oder mehrerer Stempelelemente wird das Werkstück beispielsweise innerhalb der Vorrichtung zentriert, um eine gewünschte Ausgangsposition zum Bearbeiten des Werkstücks zu realisieren. Insbesondere ist es möglich, das Positionieren des plattenförmigen Werkstücks auf den oder die Klappelemente abzustimmen, um in dem zweiten Zustand des oder der Klappelemente eine oder mehrere vorgegebene Kavitäten auszubilden.

Gemäß einer Weiterbildung des Verfahrens umfasst das Positionieren des Werkstücks und des Formkörpers zueinander ein Koppeln des Werkstücks mit einem Trägerelement des Unterwerkzeugs und ein Mitnehmen des Werkstücks mittels des gekoppelten Trägerelements in eine Normalenrichtung bezogen auf eine wesentliche Erstreckungsebene des plattenförmigen Werkstücks.

Das Trägerelement des Unterwerkzeugs der Vorrichtung ermöglicht es im Rahmen des Verfahrens das vorgegeben positionierte Werkstück behutsam an das Klappelement heranzuführen. Beispielsweise ist das mindestens eine Klappelement bereits in den zweiten Zustand umgeklappt und/oder translatorisch verfahren worden, sodass ein Heranführen des zu bearbeitenden Werkstücks mittels des oder der bewegbaren Trägerelemente das Ausbilden der ersten und/oder zweiten Kavität ermöglicht. Alternativ kann ein Heranführen auch vor oder zeitgleich zu dem Umklappen des Klappelements erfolgen, sodass stets das Positionieren des Werkstücks und das Umklappen des Klappelements und Ausbilden einer jeweiligen Kavität zeitlich aufeinander abgestimmt sind.

Gemäß einer Weiterbildung umfasst das Verfahren ein Temperieren des Formkörpers und/oder des Klappelements. Mittels der Heizelemente können der Formkörper und/oder das Klappelement vorgegeben temperiert werden, um insbesondere im Bereich der jeweiligen Kavität die Temperatur der jeweiligen Begrenzungsflächen auf eine vorgegebene Verarbeitungstemperatur anzupassen.

Gemäß einer Weiterbildung des Verfahrens umfasst das Umklappen des Klappelements ein Umklappen einer ersten Komponente um die erste Achse und ein Umklappen einer zweiten Komponente um eine zweite Achse. Auf diese Weise kann zusätzlich zu der ersten Kavität eine zweite Kavität ausgebildet werden, um das Ausbilden eines zweiten Kunststoffformteils zu ermöglichen. Zum Beispiel ist es mittels des beschriebenen Verfahrens möglich, das erste Kunststoffformteil als äußere Umschäumung und das zweite Kunststoffformteil als innere Umschäumung auszubilden bezogen auf einen Rand des plattenförmigen Werkstücks. Mittels Vorgabe der jeweiligen Kavitäten können das erste und/oder das zweite Kunststoffformteil als ein durchgehendes oder mehrere separate Spritzgusselemente ausgebildet werden.

Gemäß einer Weiterbildung umfasst das Verfahren ein Bereitstellen eines Rahmenelements und ein Anordnen des Rahmenelements auf dem Werkstück. Das Verfahren umfasst weiter ein Umklappen der zweiten Komponente um die zweite Achse und dadurch Ausbilden der zweiten Kavität zwischen der ersten Komponente, der zweiten Komponente, dem Werkstück und dem Rahmenelement.

Diese Weiterbildung des Verfahrens realisiert eine weitere Möglichkeit des Ausbildens der zweiten Kavität, die im Zusammenwirken mit dem Rahmenelement ausgebildet wird. Dieses weist vorteilhaft Begrenzungsflächen mit vorgegebenen Konturen auf, um ein gewünschtes Ausbilden des zweiten Kunststoffformteils zu ermöglichen. Nach Ausbilden der zweiten Kavität kann diese im Rahmen des Verfahrens zum Bearbeiten des Werkstücks mittels Einbringen eines vorgegebenen Materials ausgefüllt werden und dadurch das Ausbilden des zweiten Kunststoffformteils ermöglichen.

Alternativ oder zusätzlich ist die zweiten Komponente relativ zu dem Werkstück beziehungsweise dem Unterwerkzeug translatorisch, beispielsweise horizontal und/oder vertikal, bewegbar, um ein kontrolliertes Ausbilden der zweiten Kavität und/oder ein zuverlässiges und sicheres Positionieren anzuklebender Anbauelemente zu ermöglichen. Im Rahmen eines solchen Bearbeitungsverfahrens wird die zweite Komponente zum Beispiel vertikal von oben an das Werkstück herangeführt und bildet im Innenbereich die zweite Kavität und/oder eine vorgegebene Position für ein anzubringendes Anbauelement aus.

Gemäß einer Weiterbildung umfasst das Verfahren ein Anordnen eines Anbauelements an dem Werkstück mittels eines Klebeprozesses. Mittels der zuvor beschriebenen Vorrichtung ist ein Zugang zu dem Werkstück möglich, welcher im Rahmen des Verfahren insbesondere dazu genutzt werden kann, um alternativ oder zusätzlich zu einem Umschäumungs- oder Spitzgussprozess auch einen Klebeprozess zu ermöglichen. Ein solches Bearbeiten des plattenförmigen Werkstücks kann ohne Maschinenwechsel durchgeführt werden, sodass ein besonders zeitsparender und kostengünstiger Bearbeitungsprozess möglich ist, welcher sich vorteilhaft auf eine Konstruktion und Montage eines Fahrzeugdachs für ein Kraftfahrzeug auswirkt. Mittels des beschriebenen Verfahrens und der korrespondierenden Vorrichtung können zusätzliche Bearbeitungsschritte, insbesondere Maschinenwechsel, eingespart und beispielsweise auf das kostspielige Anbringen von Klebelinien verzichtet werden.

Gemäß einer Weiterbildung umfasst das Verfahren ein Aufklappen des Klappelements um die erste Achse oder ein Aufklappen des Klappelements um die erste und zweite Achse, sodass das Werkstück von dem Unterwerkzeug entnehmbar ist.

Ausführungsbeispiele der Erfindung sind im Folgenden anhand der schematischen Zeichnungen näher erläutert. Es zeigen:
- Figur 1: ein Fahrzeugdach in perspektivischer Ansicht,
- Figuren 2A-2F: verschiedene Schritte eines Verfahrens zum Bearbeiten eines plattenförmigen Werkstücks für ein Kraftfahrzeug,
- Figuren 3A-3B: ein Ausführungsbeispiel einer Vorrichtung zum Bearbeiten eines plattenförmigen Werkstücks für ein Kraftfahrzeug,
- Figuren 4A-4B: ein weiteres Ausführungsbeispiel der Vorrichtung zum Bearbeiten eines plattenförmigen Werkstücks für ein Kraftfahrzeug,
- Figuren 5A-5C: Ausführungsbeispiele eines ersten und zweiten Kunststoffformteils,
- Figuren 6A-6B: weitere Ausführungsbeispiele des ersten Kunststoffformteils.

Elemente gleicher Konstruktion oder Funktion sind figurenübergreifend mit den gleichen Bezugszeichen gekennzeichnet. Aus Gründen der Übersichtlichkeit sind gegebenenfalls nicht alle dargestellten Elemente in sämtlichen Figuren mit Bezugszeichen gekennzeichnet.

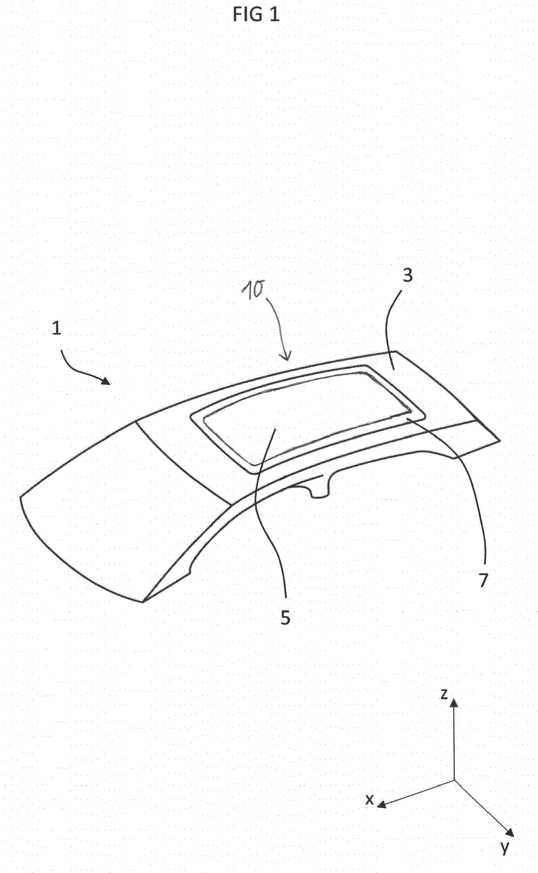

Figur 1 zeigt in einer perspektivischen Ansicht schematisch ein Kraftfahrzeug 1 mit einem Fahrzeugdach 3, das einen Deckel 5 und eine Umschäumung 7 aufweist. Der Deckel 5 ist zum Beispiel ein zum Fahrzeugdach 3 unbewegliches Festglaselement. Alternativ ist der Deckel 5 relativ zum Fahrzeugdach 3 beweglich, um wahlweise eine Öffnung in dem Fahrzeugdach 3 freizugeben und zu verschließen.

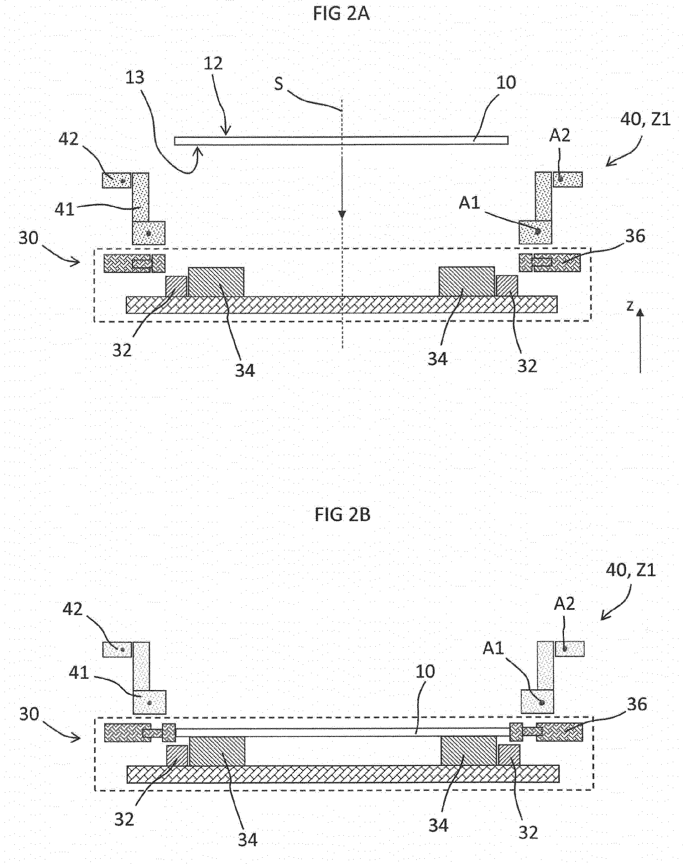

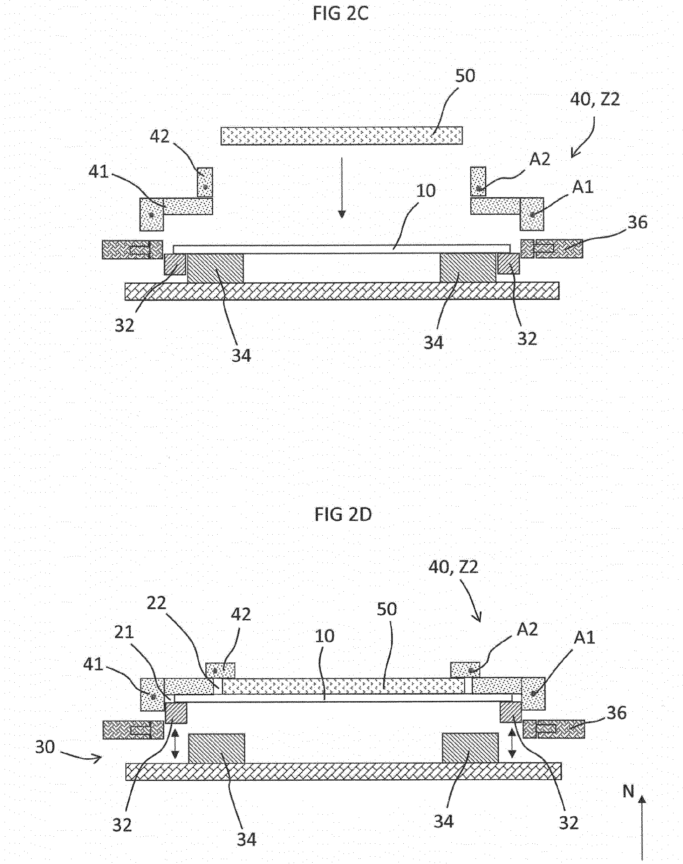

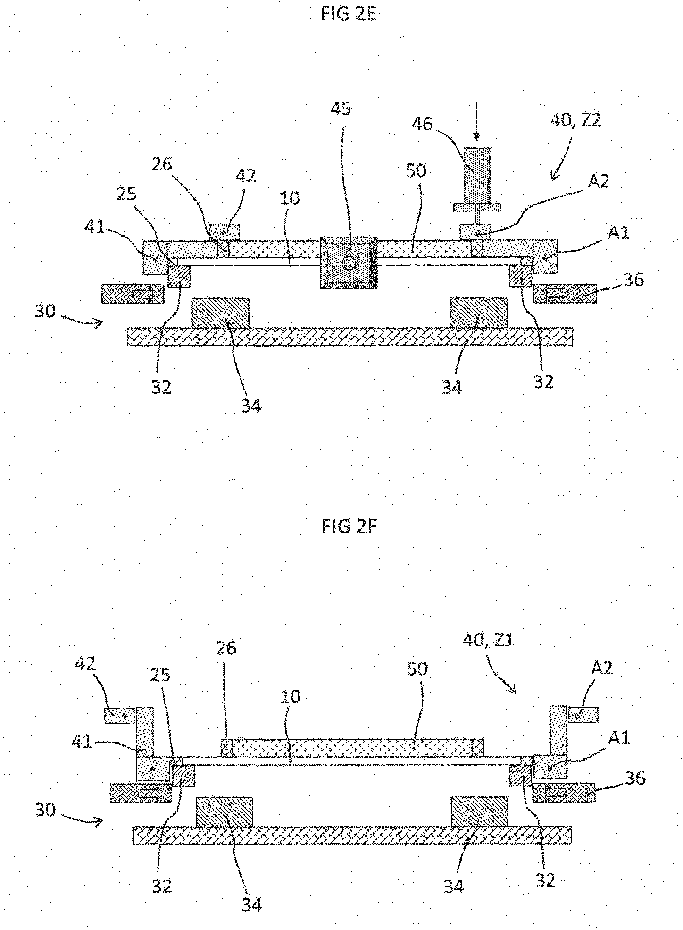

Die Umschäumung 7 realisiert ein erstes Kunststoffformteil 25, welches im Rahmen eines Verfahrens zum Bearbeiten des Deckels 5 mittels einer speziellen Vorrichtung aufwandsarm, zeitsparend und kostengünstig hergestellt werden kann. Wie anhand der nachfolgenden Figuren 2 bis 6 erläutert wird, realisiert die dazu befähigte Vorrichtung ein spezielles Formwerkzeug und ermöglicht ein vorteilhaftes Bearbeiten eines plattenförmigen Werkstücks 10 für ein Kraftfahrzeug 1.

Figuren 2A bis 2F zeigen verschiedene Schritte eines Verfahrens zum Bearbeiten des plattenförmigen Werkstücks 10 in einer schematischen Schnittdarstellung mittels einer Ausgestaltung der zuvor erwähnten Vorrichtung. Das plattenförmige Werkstück 10 kann zum Beispiel den Deckel 5 aus Figur 1 repräsentieren, welches als Glas- oder Kunststoffdeckel ausgebildet ist. In anderen Ausgestaltungen kann das plattenförmige Werkstück 10 durch eine Seitenscheibe, Frontscheibe, Heckscheibe, Heckklappenscheibe oder auch durch einen metallischen Deckel, ein Blech oder ein Kunststoffteil realisiert sein.

In Figur 2A ist schematisch ein erster Schritt eines Verfahrens zum Bearbeiten des plattenförmigen Werkstücks 10 dargestellt. Die Vorrichtung weist ein Unterwerkzeug 30 sowie ein oder mehrere Klappelemente 40 auf. Bezogen auf einen seitlichen Rand eines im Wesentlichen rechteckigen plattenförmigen Werkstücks 10 sind nutzbringend vier Klappelemente 40, jeweils eines an jeder Seite, angeordnet. Gegenüberliegende Klappelemente sind daher beabstandet voneinander angeordnet, sodass zwischen gegenüberliegenden Klappelementen ein freier Zugang von oben auf das Werkstück gegeben ist. In diesem Zusammenhang wird darauf hingewiesen, dass Begriffe wie "oben" beziehungsweise "unten" und "Oberwerkzeug" beziehungsweise "Unterwerkzeug" sich auf eine vertikale Richtung gemäß der dargestellten z-Richtung beziehen.

Das plattenförmige Werkstück kann aber auch andere, beispielsweise runde oder ovale, Geometrien aufweisen, die mittels der Vorrichtung bearbeitet werden können. Dabei bezeichnet der Begriff "plattenförmig" im Wesentlichen eine Geometrie des Werkstücks 10, bei der zwei Dimensionen gegenüber der dritten überwiegen. In Bezug auf die in Figur 2A illustrierte Darstellung weist das Werkstück 10 eine deutlich geringere Dicke in z-Richtung auf als ihre wesentliche Erstreckung in der x-y-Ebene (zum Beispiel wie in Figur 1). Außerdem kann das plattenförmige Werkstück 10 eine Krümmung, insbesondere in Bezug auf die wesentliche Erstreckungsebene, aufweisen, wie es üblicherweise bei Scheiben für Kraftfahrzeuge der Fall ist.

Das Unterwerkzeug 30 weist eine Grundplatte auf, auf der ein Halteelement 34 sowie ein Formkörper 32 angeordnet sind, welcher im Rahmen des Verfahrens auch als bewegbares Trägerelement fungiert. Das Halteelement 34 und der Formkörper 32 sind beispielsweise als durchgehender Rahmen ausgestaltet, sodass die in den Figuren 2A-2F gezeigte Darstellung beispielsweise einen mittigen Schnitt illustriert. In anderen Ausgestaltungen der Vorrichtung können das Haltelement 34 und/oder der Formkörper 32 mehrteilig ausgebildet sein.

Darüber hinaus ist in Figur 2A eine Symmetrielinie S eingezeichnet, die im Wesentlichen eine Spiegelachse definiert. Die dargestellten Elemente sind bezügliche der Symmetrielinie S auf gegenüberliegenden Seiten der Vorrichtung vorhanden. Aus Gründen der Übersichtlichkeit sind aber nicht alle Elemente auf beiden Seiten der Symmetrielinie S mit Bezugszeichen versehen. In anderen Ausgestaltungen der Vorrichtung ist nicht zwangsläufig ein symmetrischer Aufbau gegeben, sodass die Vorrichtung anwendungsbedingt, zum Beispiel hinsichtlich verschiedener Geometrien des zu bearbeitenden Werkstücks, ausgebildet werden kann.

Das Unterwerkzeug 30 weist weiter ein oder mehrere Stempelelemente 36 auf, die ein zuverlässiges Positionieren des Werkstücks 10 auf dem Halteelement 34 ermöglichen. Die Klappelemente 40 weisen jeweils eine erste Komponente 41 und eine zweite Komponente 42 auf, wobei die erste Komponente 41 um eine erste Achse A1 und die zweite Komponente 42 um eine zweite Achse A2 schwenkbar sind. Die Achsen A1 und A2 sind im Wesentlichen parallel zu der Erstreckungsebene des plattenförmigen Werkstücks 10 orientiert.

In dem ersten dargestellten Schritt sind die Klappelemente 40 beziehungsweise die jeweilige erste und zweite Komponente 41 und 42 in einem offenen, ersten Zustand Z1 und zur Aufnahme des zu bearbeitenden Werkstücks 10 bereit. Das Werkstück 10 wird mit einer Unterseite 13 auf dem Halteelement 34 positioniert.

Figur 2B illustriert einen weiteren Schritt im Rahmen des Bearbeitungsverfahrens, in dem das zu bearbeitende Werkstück 10 mittels der Stempelelemente 36 auf den Halteelementen 34 vorgegeben positioniert wird. Beispielsweise wird das Werkstück 10 relativ zu dem Formkörper 32 und/oder den Klappelementen 40 zentriert.

Figur 2C zeigt einen Schritt des Verfahrens, in dem die Klappelemente 40 beziehungsweise die jeweilige erste Komponente 41 in einen zweiten Zustand Z2 gewechselt haben. Die jeweilige erste Komponente 41 ist um die zugehörige erste Achse A1 umgeklappt und ermöglicht dadurch ein Ausbilden einer ersten Kavität 21. Darüber hinaus ist ein Rahmenelement oder Einlegeteil 50 illustriert, welches im Innenbereich auf eine Oberseite 12 des Werkstücks 10 platziert wird. Außerdem ist der Formkörper 32 in vertikaler Richtung verfahren worden und koppelt an der Unterseite 13 mit dem Werkstück 10.

In Figur 2D ist ein weiterer Schritt des Verfahrens dargestellt, in dem das verfahrbare Formelement 32 das Werkstück 10 in vertikaler Richtung gemäß der eingezeichneten Normalenrichtung N mitgenommen hat und mit dem Klappelement 40 koppelt. Auf diese Weise ist die erste Kavität 21 zwischen der ersten Komponente 41, dem Werkstück 10 und dem Formkörper 32 ausgebildet. Darüber hinaus haben auch die jeweiligen zweiten Komponenten 42 in den zweiten Zustand Z2 gewechselt, indem sie um die zugehörigen zweiten Achsen A2 umgeklappt sind. Somit wurde eine jeweilige zweite Kavität 22 zwischen der jeweiligen ersten und zweiten Komponente 41 und 42 sowie dem Rahmenelement 50 und dem Werkstück 10 ausgebildet.

Alternativ oder zusätzlich kann die erste und/oder zweite Kavität 21, 22 auch mittels eines translatorisch verfahrbaren Klappelements 40 ausgebildet werden. Dabei wird das oder werden die Klappelemente 40 relativ zu dem Unterwerkzeug 30 von dem ersten Zustand Z1, in dem sie beispielsweise seitlich von dem Werkstück 10 beabstandet sind, in Richtung des Werkstücks 10 verfahren und wechseln in den zweiten Zustand Z2, in dem sie die erste und/oder zweite Kavität 21, 22 ausbilden. Eine solche translatorische Bewegung des jeweiligen Klappelements 40 erfolgt überwiegend in einer ersten Richtung, die parallel zu einer Haupterstreckungsebene des plattenförmigen Werkstücks 10 ist. In den dargestellten Ausführungsbeispielen entspricht die erste Richtung einer Richtung in der x-y-Ebene senkrecht zur z-Richtung und zur in Figur 2D eingezeichneten Normalenrichtung N des Werkstücks 10.

So werden beispielsweise gegenüberliegende Klappelemente 40 translatorisch aufeinander zu verfahren bis eine jeweilige vorgegebene Position relativ zum Werkstück 10 oder dem Unterwerkzeug 30 erreicht ist, um in Kontakt mit dem Werkstück 10 oder anderer zusammenwirkender Elemente eine oder mehrere vorgesehene Kavitäten 21, 22 auszubilden oder vorgegebene Positionen zum Anbringen von Anbauelementen 54 zu definieren.

Das Ausbilden eines zuverlässigen und sicheren Kontakts der Klappelemente 40 mit dem Werkstück 10 oder anderer zusammenwirkender Elemente erfolgt beispielsweise mittels horizontalen Ansetzens und/oder eines vertikalen Absetzens des jeweiligen Klappelements 40 an oder auf dem entsprechenden Element. Dabei ist eine vertikale Bewegung relativ zu dem Werkstück 10 und dem Unterwerkzeug 30 signifikant geringer ausgeprägt als die zuvor beschriebene horizontale Bewegung in der x-y-Ebene.

Darüber hinaus kann die zweite Komponente 42 auch unabhängig von der ersten Komponente 41 des Klappelements 40 derart ansteuerbar sein, dass beispielsweise die erste Komponente 41 mittels Umklappen um die erste Achse A1 in den zweiten Zustand versetzt werden kann und die zweite Komponente 42 durch eine translatorische Bewegung mittels horizontalen und/oder vertikalen Verfahrens in den zweiten Zustand wechselt, um ein kontrolliertes Ausbilden der zweiten Kavität 22 und/oder ein zuverlässiges und sicheres Positionieren anzuklebender Anbauelemente 54 zu ermöglichen. Beispielsweise ist die zweite Komponente als Zylinder- oder Spannelement realisiert, welches vorgegeben verfahren oder betätigt werden kann.

In Figur 2E ist illustriert, wie die jeweiligen ersten und zweiten Kavitäten 21 und 22 mittels eines ersten und eines zweiten Materialspender 45 und 46 ausgefüllt sind, wobei der Materialspender 45 in Bezug auf die gezeigte Schnittdarstellung als ein aufgesetztes Element illustriert ist. Die Materialspender 45, 46 sind relativ zum eingespannten Werkstück 10 bewegbar ausgebildet und können an vorgegebenen Positionen ein Material in die Kavitäten 21 und 22 einspeisen. Auf diese Weise können ein erstes und ein zweites Kunststoffformteil 25 und 26 ausgebildet werden, deren äußere Form durch die begrenzende Geometrie der ersten und zweiten Kavität 21 und 22 vorgegeben ist. In weiteren Ausgestaltungen der Vorrichtung kann auch nur ein Materialspender vorhanden sein, der nacheinander oder zeitgleich, beispielsweise mittels verschiedener Zuleitungen, die jeweiligen Kavitäten 21 und 22 mit vorgegebenem Material auffüllt. Alternativ sind weitere Materialspender vorhanden, um das Einspeisen von Material in die ausgebildeten Kavitäten 21 und 22 zu beschleunigen und zu einem zeitnahen Fertigungsprozess beizutragen. Die Materialspender 45 und 46 sind beispielsweise als Mischköpfe mit diversen Zuleitungen ausgestattet.

Der erste und/oder zweite Materialspender 45, 46 können alternativ oder zusätzlich auch dazu befähigt sein, einen Klebeprozess durchzuführen, um beispielsweise in dem Innenbereich des Rahmenelements 50 ein oder mehrere Anbauelemente 52 an der Oberseite 12 des Werkstücks 10 anzuordnen. Auf diese Weise kann mittels ein und derselben Vorrichtung ein Umschäumen und Verkleben durchgeführt werden, ohne zeitaufwendige Maschinenwechsel zu benötigen. Ein solches Verkleben von Anbauelementen 52 kann als weiterer Bearbeitungsschritt zeitgleich oder zeitnah zum Ausbilden des ersten und/oder zweiten Kunststoffformteils 25 und 26 durchgeführt werden.

In einem weiteren Schritt des Verfahrens gemäß Figur 2F werden die Klappelemente 40 wieder geöffnet, indem die jeweilige erste und zweite Komponente 41 und 42 um die jeweilige Achse A1 und A2 wieder in den ersten Zustand Z1 umklappen. Das bearbeitete Werkstück 10 kann daraufhin sicher aus der Vorrichtung entnommen werden.

Die beschriebene Vorrichtung und das korrespondierende Verfahren zum Bearbeiten des plattenförmigen Werkstücks 10 realisieren ein nach oben offenes Werkzeugkonzept ohne Oberwerkzeug, welches einen bewegbaren Unterbau und ein oder mehrere Klappelemente 40 aufweist. Aufgrund eines solchen speziellen Formwerkzeugs ist das Bearbeiten von Werkstücken 10 im Wesentlichen unabhängig von der Bauteilgröße des Werkstücks und somit nicht auf maximale Geometrien von beispielsweise 1200 mm mal 900 mm beschränkt, wie es üblicherweise der Fall bei Formwerkzeugen ist, die massive Platten als Oberwerkzeug und Unterwerkzeug sowie zugehörige Formenträger aufweisen und geschlossene Kavitäten ohne weiteren Zugang zu dem Werkstück ausbilden.

Dadurch, dass kein separates Oberwerkzeug vorhanden ist, ist mittels der beschriebenen Vorrichtung ein übersichtliches und platzsparendes Formwerkzeug zum Bearbeiten von plattenförmigen Werkstücken 10 realisierbar. Die beschriebene Vorrichtung beinhaltet somit eine signifikante Material- und Gewichtsersparnis im Vergleich zu Werkzeugen, die ein Oberwerkzeug aufweisen. Dies wirkt sich zusätzlich vorteilhaft auf die Kosten bei der Konstruktion einer solchen Vorrichtung aus und führt zu weiteren möglichen Einsparungen.

Begründet durch das eingesparte Gewicht, welches ein Oberwerkzeug inklusive Formträger mit sich bringen würde, ist das Unterwerkzeug 30 entlastet und muss bei einem Bearbeitungsvorgang weniger Gewicht halten und bewegen können. Eine solche Gewichtsersparnis kann beispielsweise mehrere tausend Kilogramm umfassen. Somit ermöglicht die beschriebene Vorrichtung zusätzliche Vereinfachungen in Bezug auf Ansteuerung und Mobilität des Unterbaus, sodass die für die Bewegung des Unterwerkzeugs 30 benötigten Kräfte entsprechend reduziert werden können und ein Beitrag zu einem energie- und kosteneffizienten Bearbeiten des plattenförmigen Werkstücks 10 geleistet wird.

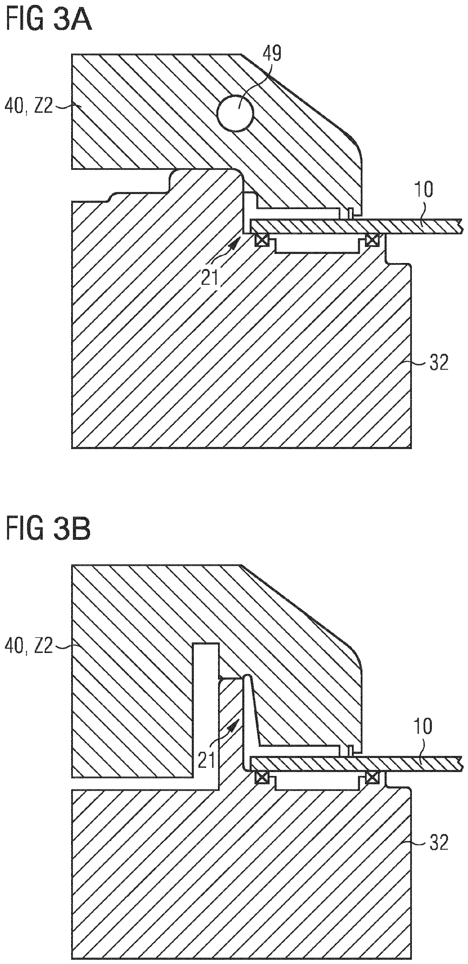

In den Figuren 3A und 3B sind in einer schematischen Seitenansicht weitere Ausführungsbeispiele einer solchen Vorrichtung zum Bearbeiten eines plattenförmigen Werkstücks 10 illustriert. Dargestellt ist jeweils ein Klappelement 40 in dem zweiten, umgeklappten Zustand Z2, sodass die erste Kavität 21 zwischen dem Werkstück 10, dem Klappelement 40 und dem Unterwerkzeug 30 ausgebildet ist. In dem gezeigten Ausführungsbeispiel ist die erste Kavität 21 zwischen dem Werkstück 10, dem Klappelement 40 und dem Formträger 32 des Unterwerkzeugs 30 ausgebildet. Anhand der Figuren 3A und 3B ist ersichtlich, dass mittels der beschriebenen Vorrichtung und einem korrespondierendem Bearbeitungsverfahren auch ein Ausbilden von Kunststoffformteilen 25, 26 mit steilen Konturen möglich ist, die beispielsweise Außenblenden realisieren können.

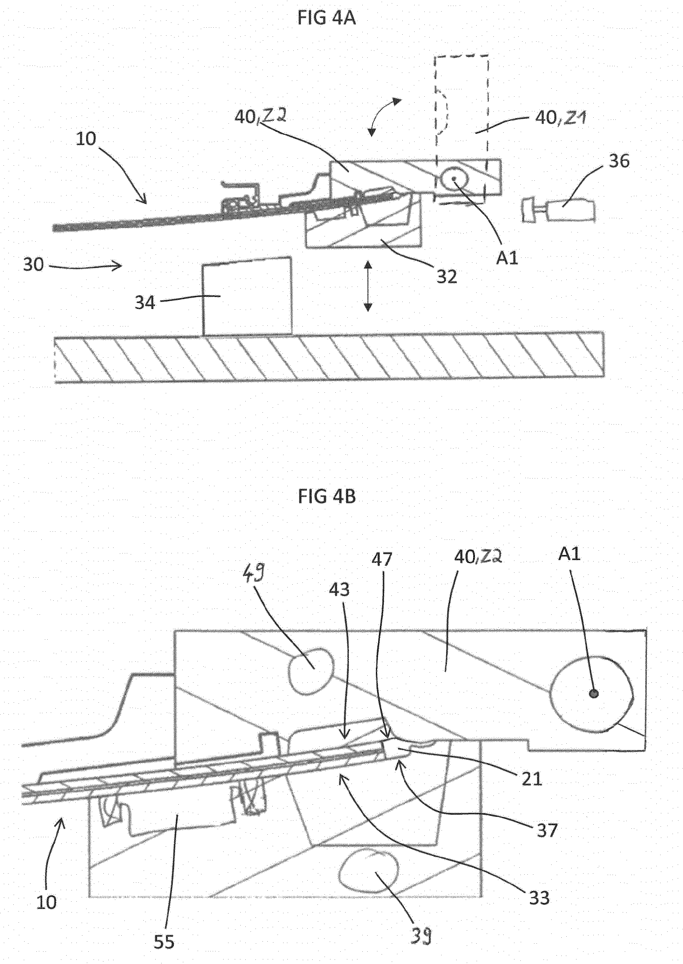

In den Figuren 4A und 4B ist ein weiteres Ausführungsbeispiel der Vorrichtung zum Bearbeiten des plattenförmigen Werkstücks 10 gezeigt. Figur 4A illustriert das Klappelement 40 in dem offenen, ersten Zustand Z1 (gestrichelt dargestellt) und in dem geschlossenen, zweiten Zustand Z2 (durchgezogen dargestellt), in dem dieser um die erste Achse A1 umgeklappt ist und im Zusammenwirken mit dem Werkstück 10 und dem Formkörper 32 die erste Kavität 21 ausbildet.

In Figur 4B ist eine detaillierte Ansicht des nach Figur 4A dargestellten Ausführungsbeispiels illustriert, in dem eine mögliche Geometrie der ersten Kavität 21 deutlicher zu erkennen ist. Diese weist eine schmale Lippe oder Nase auf, die sich von dem Werkstück 10 weg erstreckt. Die erste Kavität 21 ist durch jeweilige erste Begrenzungsflächen 37 und 47 des Formkörpers 32 und des Klappelements 40 begrenzt, welche beispielsweise Silikon, Aluminium, Stahl und/oder Kunststoff aufweisen, um ein schonendes, sicheres und zuverlässiges Ausbilden des ersten Kunststoffformteils 25 zu ermöglichen. Entsprechend ist die äußere Form des auszubildenden ersten Kunststoffformteils 25 durch die Konturen der Begrenzungsflächen 37 und 47 bestimmt. Die zuvor beschriebene zweite Kavität 22 kann entsprechend durch zweite Begrenzungsflächen begrenzt sein, die an dem Klappelement 40 beziehungsweise an der ersten und zweiten Komponente 41 und 42 und dem Rahmenelement 50 ausgebildet sind.

Das Werkstück 10 ist in diesem Ausführungsbeispiel als eine Verbundscheibe realisiert, die eine Außenschicht, eine Innenschicht und gegebenenfalls eine oder mehrere Zwischenschichten aufweist. Außerdem sind Heizelemente 39 und 49 dargestellt, die innerhalb des Formkörpers 32 beziehungsweise innerhalb des Klappelements 40 angeordnet sind, um die jeweiligen Komponenten vorgegeben zu temperieren. Auf diese Weise können der Formkörper und/oder das Klappelement, insbesondere im Bereich der auszubildenden ersten und/oder zweiten Kavität 21, 22, zum Beispiel auf eine vorgegebene Bearbeitungstemperatur erhitzt werden.

Darüber hinaus weisen der Formkörper 32 und das Klappelement 40 jeweils einen Haltebereich 33 und 43 aus Silikon, Aluminium, Stahl und/oder Kunststoff für das Werkstück 10 auf, die einen sicheren und zuverlässigen Halt des zu bearbeitenden Werkstücks 10 ermöglichen. Außerdem ist an der Unterseite 13 ein Vakuumbereich 55 zwischen dem Werkstück 10 und dem Formkörper 32 ausgebildet, welcher weiter zu einem zuverlässigen Halt und einer stabilen Positionierung des Werkstücks 10 beiträgt. Darüber hinaus kann die Vorrichtung auch noch weitere Halteelemente, wie integrierte Magnete, umfassen, die zu einem sicheren und stabilen Halt des Werkstücks 10 innerhalb der Vorrichtung beitragen.

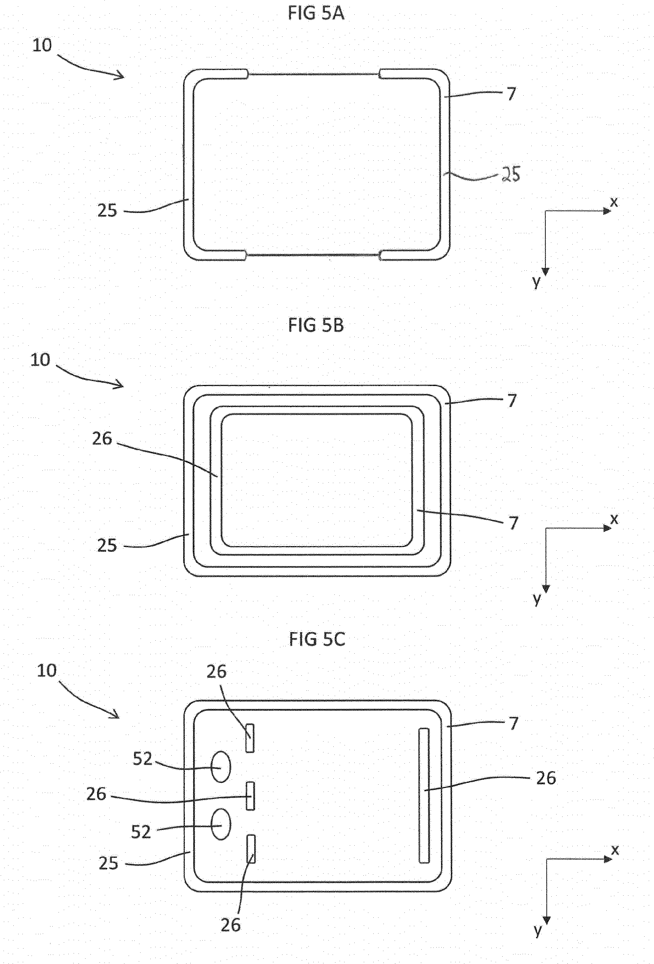

In den Figuren 5A bis 5C sind mögliche Ausgestaltungen des ersten und/oder zweiten Kunststoffformteils 25, 26 dargestellt. In Figur 5A ist das erste Kunststoffformteil 25 als zweiteilige Umschäumung 7 realisiert, die eine vordere und eine hintere Kante des Werkstücks 10 umschließt. In Figur 5B ist das Werkstück 10 derart bearbeitet, dass mittels der ersten Kavität 21 und der zweiten Kavität 22 das erste Kunststoffformteil 25 als außenliegender und das zweite Kunststoffformteil 26 beabstandet als innenliegender umlaufender Rahmen ausgebildet ist. Beide Kunststoffformteile 25 und 26 können beispielsweise im Rahmen eines Umschäumungsprozesses hergestellt sein und eine aus Polyurethan ausgebildete Umschäumung 7 realisieren, um ein zuverlässiges Anbinden an eine Karosserie des Kraftfahrzeugs 1 zu ermöglichen.

In Figur 5C ist das zweite Kunststoffformteil 26 mehrstückig ausgebildet im Innenbereich des Werkstücks 10 ausgebildet. Darüber hinaus sind zwei Anbauelemente 52 illustriert, welche mittels eines Klebevorgangs auf der Oberseite 12 des Werkstücks 10 aufgebracht wurden. Solche Anbauelemente 52 können zum Beispiel Befestigungs- und/oder Verstärkungselemente realisieren, die zu einer verbesserten Stabilität und einem einfachen Weiterverarbeiten des Werkstücks 10 beitragen. Beispielsweise kann mittels solcher Elemente die Stabilität des Deckels 5 erhöht werden und ein einfaches und zuverlässiges Anbinden des Deckels 5 an eine Karosserie des Kraftfahrzeugs 1 vorbereitet werden.

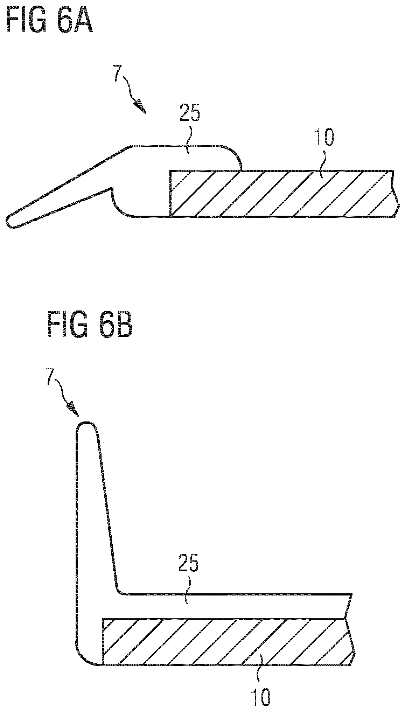

Die Figuren 6A und 6B zeigen zwei weitere mögliche Ausgestaltungen des ersten Kunststoffformteils 25, welche mittels der beschriebenen Vorrichtung und eines korrespondierenden Herstellungsverfahrens, zum Beispiel innerhalb der ersten Kavität 21, ausgebildet werden können. Aufgrund des Zusammenwirkens des Klappelements 40 und des Formkörpers 32 können auch relativ steile und schmale Außenkonturen der Kunststoffformteile 25, 26 hergestellt werden.

### Bezugszeichenliste

- 1: Kraftfahrzeug
- 3: Fahrzeugdach
- 5: Deckel
- 7: Umschäumung
- 10: Werkstück
- 12: Oberseite des Werkstücks
- 13: Unterseite des Werkstücks
- 21: erste Kavität
- 22: zweite Kavität
- 25: erstes Kunststoffformteil
- 26: zweites Kunststoffformteil
- 30: Unterwerkzeug
- 32: Formkörper
- 33: Haltebereich des Formkörpers
- 34: Halteelement
- 36: Stempelelement
- 37: erste Begrenzungsfläche des Formkörpers
- 39: Heizelement des Formkörpers
- 40: Klappelement
- 41: erste Komponente des Klappelements
- 42: zweite Komponente des Klappelements
- 43: Haltebereich des Klappelements
- 45: erster Materialspender
- 46: zweiter Materialspender
- 47: erste Begrenzungsfläche des Klappelements
- 49: Heizelement des Klappelements
- 50: Rahmenelement
- 52: Anbauelement
- 55: Vakuum

- A1: erste Achse
- A2: zweite Achse
- N: Normalenrichtung
- Z1: erster, offener Zustand des Klappelements oder der jeweiligen Komponente
- Z2: zweiter, geschlossener Zustand des Klappelements oder der jeweiligen Komponente

## Patentansprüche

1. Vorrichtung zum Bearbeiten eines plattenförmigen Werkstücks (10) für ein Kraftfahrzeug (1), umfassend:
- ein Unterwerkzeug (30) mit einem Haltebereich (33) für das Werkstück (10), und
- ein Klappelement (40), das einen Haltebereich (43) für das Werkstück (10) aufweist und das relativ zu dem Unterwerkzeug (30) translatorisch und/oder rotatorisch bewegbar ist, um von einem ersten Zustand (Z1) mittels einer translatorischen Bewegung, die überwiegend in einer ersten Richtung erfolgt, die parallel zu einer Haupterstreckungsrichtung des plattenförmigen Werkstücks (10) ist, und/oder mittels Umklappen in einen zweiten Zustand (Z2) zu wechseln und eine erste Kavität (21) zwischen dem Haltebereich (43) des Klappelements (40) und dem Werkstück (10) auszubilden, sodass in dem zweiten Zustand (Z2) die erste Kavität (21) mit einem vorgegebenen Material befüllbar ist und zudem ein innenliegender Bereich des Werkstücks (10) zur weiteren Bearbeitung frei zugänglich ist.

2. Vorrichtung nach Anspruch 1, bei der
- das Unterwerkzeug (30) einen Formkörper (32) mit einem Haltebereich (33) für das Werkstück (10) aufweist, und
- die erste Kavität (21) zwischen dem Haltebereich (33) des Formkörpers (32), dem Haltebereich (43) des Klappelements (40) und dem Werkstück (10) ausbildbar ist.

3. Vorrichtung nach Anspruch 1 oder 2, bei der das Klappelement (40) eine erste Komponente (41) und eine zweite Komponente (42) aufweist, wobei die erste Komponente (41) um die erste Achse (A1) und die zweite Komponente (42) um eine zweite Achse (A2) schwenkbar ist, um in einem umgeklappten zweiten Zustand (Z2) der ersten Komponente (41) um die erste Achse (A1) die erste Kavität (21) und in einem umgeklappten zweiten Zustand (Z2) der zweiten Komponente (42) um die zweite Achse (A2) eine zweite Kavität (22) zwischen der ersten Komponente (41), der zweiten Komponente (42) und dem Werkstück (10) auszubilden.

4. Vorrichtung nach einem der Ansprüche 1 bis 3, bei der das Unterwerkzeug (30) und das Klappelement (40) im Bereich der ausbildbaren ersten Kavität (21) jeweils eine vorgegebene erste Begrenzungsfläche (37, 47) umfassen, die Silikon, Aluminium, Stahl und/oder Kunststoff aufweist.

5. Vorrichtung nach einem der Ansprüche 1 bis 4, umfassend einen ersten Materialspender (45), der relativ zu dem Unterwerkzeug (30) bewegbar ist und der zum Einbringen eines vorgegebenen Materials in die ausbildbare erste und/oder zweite Kavität (21, 22) ausgebildet ist, um ein erstes und/oder zweites Kunststoffformteil (25, 26) auszubilden.

6. Vorrichtung nach einem der Ansprüche 1 bis 5, bei der das Unterwerkzeug (30) und/oder das Klappelement (40) ein Heizelement (39, 49) zum Temperieren des Unterwerkzeugs (30) und/oder des Klappelements (40) aufweisen.

7. Verfahren zum Bearbeiten eines plattenförmigen Werkstücks (10) für ein Kraftfahrzeug (1) mittels einer Vorrichtung nach einem der Ansprüche 1 bis 6, umfassend:
- Bereitstellen des Werkstücks (10),
- Bereitstellen eines Unterwerkzeugs (30),
- Bereitstellen eines Klappelements (40), welches relativ zu dem Unterwerkzeug (30) bewegbar ist,
- Positionieren des Werkstücks (10) und des Unterwerkzeugs (30) zueinander,
- translatorisches Bewegen und/oder Umklappen des Klappelements (40) ausgehend von einem ersten Zustand (Z1) in einen zweiten Zustand (Z2), wobei die translatorische Bewegung überwiegend entlang einer ersten Richtung erfolgt, die parallel zu einer Haupterstreckungsrichtung des plattenförmigen Werkstücks (10) ist, und dadurch Anordnen des Klappelements (40) und des Unterwerkzeugs (30) relativ zueinander, sodass das Klappelement (40) das Werkstück (10) kontaktiert und eine erste Kavität (21) zwischen dem Klappelement (40) und dem Werkstück (10) ausgebildet wird, und
- Einbringen eines vorgegebenen Materials in die erste Kavität (21) und dadurch Ausbilden eines ersten Kunststoffformteils (25).

8. Verfahren nach Anspruch 7, bei dem das Unterwerkzeug (30) einen Formkörper (32) mit einem Haltebereich (33) für das Werkstück (10) aufweist, umfassend:
- Positionieren des Werkstücks (10) und des Formkörpers (32) zueinander, und
- Ausbilden der ersten Kavität (21) zwischen dem Haltebereich (33) des Formkörpers (32), dem Haltebereich (43) des Klappelements (40) und dem Werkstück (10).

9. Verfahren nach einem der Ansprüche 7 bis 8, bei dem das Unterwerkzeug (30) relativ zu dem Klappelement (40) bewegbar ist und das Positionieren des Werkstücks (10) und des Unterwerkzeugs (30) zueinander umfasst:
- Koppeln des Werkstücks (10) mit dem Unterwerkzeug (30), und
- Mitnehmen des Werkstücks (10) mittels des Unterwerkzeugs (30) entlang einer Normalenrichtung (N) bezogen auf eine Haupterstreckungsebene des plattenförmigen Werkstücks (10).

10. Verfahren nach einem der Ansprüche 7 bis 9, umfassend: Temperieren des Unterwerkzeugs (30) und/oder des Klappelements (40).

11. Verfahren nach einem der Ansprüche 7 bis 10, bei dem das Klappelement (40) eine erste Komponente (41) und eine zweite Komponente (42) aufweist, wobei die erste Komponente (41) um die erste Achse (A1) und die zweite Komponente (42) um eine zweite Achse (A2) schwenkbar ist, sodass das Umklappen des Klappelements (40) umfasst:
- Umklappen der ersten Komponente (41) um die erste Achse (A1) und dadurch Ausbilden der ersten Kavität (21) zwischen der ersten Komponente (41), dem Formkörper (32) und dem Werkstück (10), und
- Umklappen der zweiten Komponente (42) um die zweite Achse (A2) und dadurch Ausbilden einer zweiten Kavität (22) zwischen der ersten Komponente (41), der zweiten Komponente (42) und dem Werkstück (10).

12. Verfahren nach Anspruch 11, umfassend:
- Bereitstellen eines Rahmenelements (50),
- Anordnen des Rahmenelements (50) auf dem Werkstück (10), und
- Umklappen der zweiten Komponente (42) um die zweite Achse (A2) und dadurch Ausbilden der zweiten Kavität (22) zwischen der ersten Komponente (41), der zweiten Komponente (42), dem Werkstück (10) und dem Rahmenelement (50) .

13. Verfahren nach einem der Ansprüche 7 bis 12, bei dem ein Einbringen von Material in die erste und/oder zweite Kavität (21, 22) umfasst:
Ausbilden des ersten und/oder eines zweiten Kunststoffformteils (25, 26) in Form einer umlaufenden Umschäumung (7).

14. Verfahren nach einem der Ansprüche 7 bis 13, umfassend: Anordnen eines Anbauelements (52) an dem Werkstück (10) mittels eines Klebeprozesses.

15. Verfahren nach einem der Ansprüche 7 bis 14, umfassend: Aufklappen des Klappelements (40) um die erste Achse (A1) oder um die erste und zweite Achse (A1, A2), sodass das Werkstück (10) von dem Unterwerkzeug (30) entnehmbar ist.

## Claims

1. Device for machining a plate-shaped workpiece (10) for a motor vehicle (1), comprising:
- a lower tool (30) with a holding region (33) for the workpiece (10), and
- a folding element (40) which has a holding region (43) for the workpiece (10) and which is movable in a translatory and/or rotary manner relative to the lower tool (30) in order to change from a first state (Z1) into a second state (Z2) by means of a translatory movement, which takes place predominantly in a first direction which is parallel to a main direction of extent of the plate-shaped workpiece (10), and/or by means of folding over, and to form a first cavity (21) between the holding region (43) of the folding element (40) and the workpiece (10) and therefore, in the second state (Z2) the first cavity (12) can be filled with a predetermined material and, in addition, an inner region of the workpiece (10) is freely accessible for further machining.

2. Device according to Claim 1, in which
- the lower tool (30) has a moulding body (32) with a holding region (33) for the workpiece (10), and
- the first cavity (21) can be formed between the holding region (33) of the moulding body (32), the holding region (43) of the folding element (40) and the workpiece (10).

3. Device according to Claim 1 or 2, in which the folding element (40) has a first component (41) and a second component (42), wherein the first component (41) is pivotable about the first axis (A1) and the second component (42) is pivotable about a second axis (A2) in order, in a folded-over second state (Z2) of the first component (41) about the first axis (A1), to form the first cavity (21), and, in a folded-over second state (Z2) of the second component (42) about the second axis (A2), to form a second cavity (22), between the first component (41), the second component (42) and the workpiece (10) .

4. Device according to one of Claims 1 to 3, in which, in the region of the first cavity (21) which can be formed, the lower tool (30) and the folding element (40) each comprise a predetermined first boundary surface (37, 47) which comprises silicone, aluminium, steel and/or plastic.

5. Device according to one of Claims 1 to 4, comprising a first material dispenser (45) which is movable relative to the lower tool (30) and which is designed for introducing a predetermined material into the first and/or second cavity (21, 22) which can be formed, in order to form a first and/or second plastics moulding (25, 26).

6. Device according to one of Claims 1 to 5, in which the lower tool (30) and/or the folding element (40) have/has a heating element (39, 49) for controlling the temperature of the lower tool (30) and/or of the folding element (40).

7. Method for machining a plate-shaped workpiece (10) for a motor vehicle (1) by means of a device according to one of Claims 1 to 6, comprising:
- providing the workpiece (10),
- providing a lower tool (30),
- providing a folding element (40) which is movable relative to the lower tool (30),
- positioning the workpiece (10) and the lower tool (30) with respect to each other,
- moving the folding element (40) in a translatory manner and/or folding over same from a first state (Z1) into a second state (Z2), wherein the translator movement takes place predominantly along a first direction which is parallel to a main direction of extent of the plate-shaped workpiece (10), and thereby arranging the folding element (40) and the lower tool (30) relative to each other such that the folding element (40) makes contact with the workpiece (10) and a first cavity (21) is formed between the folding element (40) and the workpiece (10), and
- introducing a predetermined material into the first cavity (21) and thereby forming a first plastics moulding (25) .

8. Method according to Claim 7, in which the lower tool (30) has a moulding body (32) with a holding region (33) for the workpiece (10), comprising:
- positioning the workpiece (10) and the moulding body (32) with respect to each other, and
- forming the first cavity (21) between the holding region (33) of the moulding body (32), the holding region (43) of the folding element (40) and the workpiece (10).

9. Method according to either of Claims 7 and 8, in which the lower tool (30) is movable relative to the folding element (40), and the positioning of the workpiece (10) and the lower tool (30) with respect to each other comprises:
- coupling the workpiece (10) to the lower tool (30), and
- carrying along the workpiece (10) by means of the lower tool (30) along a normal direction (N) with respect to a main plane of extent of the plate-shaped workpiece (10).

10. Method according to one of Claims 7 to 9, comprising: controlling the temperature of the lower tool (30) and/or of the folding element (40).

11. Method according to one of Claims 7 to 10, in which the folding element (40) has a first component (41) and a second component (42), wherein the first component (41) is pivotable about the first axis (A1) and the second component (42) is pivotable about a second axis (A2), and therefore the folding over of the folding element (40) comprises:
- folding over the first component (41) about the first axis (A1) and thereby forming the first cavity (21) between the first component (41), the moulding body (32) and the workpiece (10), and
- folding over the second component (42) about the second axis (A2) and thereby forming a second cavity (22) between the first component (41), the second component (42) and the workpiece (10).

12. Method according to Claim 11, comprising:
- providing a frame element (50),
- arranging the frame element (50) on the workpiece (10), and
- folding over the second component (42) about the second axis (A2) and thereby forming the second cavity (22) between the first component (41), the second component (42), the workpiece (10) and the frame element (50).

13. Method according to one of Claims 7 to 12, in which the introducing of material into the first and/or second cavity (21, 22) comprises:
forming the first and/or a second plastics moulding (25, 26) in the form of an encircling foam encapsulation (7).

14. Method according to one of Claims 7 to 13, comprising: arranging an add-on element (52) on the workpiece (10) by means of an adhesive bonding process.

15. Method according to one of Claims 7 to 14, comprising: opening up the folding element (40) about the first axis (A1) or about the first axis and second axis (A1, A2) such that the workpiece (10) can be removed from the lower tool (30).

## Revendications

1. Dispositif pour usiner une pièce ouvrée (10) en forme de plaque pour un véhicule automobile (1), comprenant :
- un outil inférieur (30) doté d'une zone de maintien (33) pour la pièce ouvrée (10), et
- un élément rabattant (40), qui possède une zone de maintien (43) pour la pièce ouvrée (10) et qui peut être déplacé en translation et/ou en rotation par rapport à l'outil inférieur (30) afin de changer d'un premier état (Z1) au moyen d'un mouvement de translation, qui s'effectue principalement dans une première direction qui est parallèle à une direction d'extension principale de la pièce ouvrée (10) en forme de plaque, et/ou au moyen d'un rabattement en un deuxième état (Z2) et former une première cavité (21) entre la zone de maintien (43) de l'élément rabattant (40) et la pièce ouvrée (10), de sorte que dans le deuxième état (Z2), la première cavité (21) peut être remplie avec un matériau prédéfini et, en plus de cela, une zone intérieure de la pièce ouvrée (10) est librement accessible pour un usinage supplémentaire.

2. Dispositif selon la revendication 1, dans lequel
- l'outil inférieur (30) possède un corps de moulage (32) doté d'une zone de maintien (33) pour la pièce ouvrée (10), et
- la première cavité (21) peut être formée entre la zone de maintien (33) du corps de moulage (32), la zone de maintien (43) de l'élément rabattant (40) et la pièce ouvrée (10).

3. Dispositif selon la revendication 1 ou 2, dans lequel l'élément rabattant (40) possède un premier composant (41) et un deuxième composant (42), le premier composant (41) pouvant pivoter autour du premier axe (A1) et le deuxième composant (42) autour d'un deuxième axe (A2) en vue de former la première cavité (21) dans un deuxième état (Z2) rabattu du premier composant (41) autour du premier axe (A1) et, dans un deuxième état (Z2) rabattu du deuxième composant (42) autour du deuxième axe (A2), une deuxième cavité (22) entre le premier composant (41), le deuxième composant (42) et la pièce ouvrée (10).

4. Dispositif selon l'une des revendications 1 à 3, dans lequel l'outil inférieur (30) et l'élément rabattant (40) comportent respectivement, dans la zone de la première cavité (21) pouvant être formée, une première surface de délimitation (37, 47) prédéfinie, laquelle comprend du silicone, de l'aluminium, de l'acier et/ou une matière plastique.

5. Dispositif selon l'une des revendications 1 à 4, comprenant un premier distributeur de matériau (45), qui peut être déplacé par rapport à l'outil inférieur (30) et qui est configuré pour introduire un matériau prédéfini dans la première et/ou la deuxième cavité (21, 22) pouvant être formée en vue de former une première et/ou une deuxième pièce moulée en matière plastique (25, 26).

6. Dispositif selon l'une des revendications 1 à 5, dans lequel l'outil inférieur (30) et/ou l'élément rabattant (40) possède un élément chauffant (39, 49) destiné à équilibrer la température de l'outil inférieur (30) et/ou de l'élément rabattant (40).

7. Procédé d'usinage d'une pièce ouvrée (10) en forme de plaque pour un véhicule automobile (1) au moyen d'un dispositif selon l'une des revendications 1 à 6, comprenant :
- fourniture de la pièce ouvrée (10),
- fourniture d'un outil inférieur (30),
- fourniture d'un élément rabattant (40), qui peut être déplacé par rapport à l'outil inférieur (30),
- positionnement de la pièce ouvrée (10) et de l'outil inférieur (30) l'un par rapport à l'autre,
- déplacement en translation et/ou rabattement de l'élément rabattant (40) d'un premier état (Z1) en un deuxième état (Z2), le mouvement de translation s'effectuant principalement le long d'une première direction qui est parallèle à une direction d'extension principale de la pièce ouvrée (10) en forme de plaque, et ainsi disposition de l'élément rabattant (40) et de l'outil inférieur (30) l'un par rapport à l'autre, de sorte que l'élément rabattant (40) entre en contact avec la pièce ouvrée (10) et qu'une première cavité (21) soit formée entre l'élément rabattant (40) et la pièce ouvrée (10), et
- introduction d'un matériau prédéfini dans la première cavité (21) et ainsi formation d'une première pièce moulée en matière plastique (25).

8. Procédé selon la revendication 7, dans lequel l'outil inférieur (30) possède un corps de moulage (32) doté d'une zone de maintien (33) pour la pièce ouvrée (10), comprenant :
- positionnement de la pièce ouvrée (10) et du corps de moulage (32) l'un par rapport à l'autre, et
- formation de la première cavité (21) entre la zone de maintien (33) du corps de moulage (32), la zone de maintien (43) de l'élément rabattant (40) et la pièce ouvrée (10).

9. Procédé selon l'une des revendications 7 à 8, dans lequel outil inférieur (30) peut être déplacé par rapport à l'élément rabattant (40) et le positionnement de la pièce ouvrée (10) et de l'outil inférieur (30) l'un par rapport à l'autre comprend :
- accouplement de la pièce ouvrée (10) avec l'outil inférieur (30), et
- emport de la pièce ouvrée (10) au moyen de l'outil inférieur (30) le long d'une direction normale (N) par rapport à un plan d'extension principal de la pièce ouvrée (10) en forme de plaque.

10. Procédé selon l'une des revendications 7 à 9, comprenant : équilibrage de température de l'outil inférieur (30) et/ou de l'élément rabattant (40).

11. Procédé selon l'une des revendications 7 à 10, dans lequel l'élément rabattant (40) possède un premier composant (41) et un deuxième composant (42), le premier composant (41) pouvant pivoter autour du premier axe (A1) et le deuxième composant (42) autour d'un deuxième axe (A2), de sorte que le rabattement de l'élément rabattant (40) comprend :
- rabattement du premier composant (41) autour du premier axe (A1) et ainsi formation de la première cavité (21) entre le premier composant (41), le corps de moulage (32) et la pièce ouvrée (10), et
- rabattement du deuxième composant (42) autour du deuxième axe (A2) et ainsi formation d'une deuxième cavité (22) entre le premier composant (41), le deuxième composant (42) et la pièce ouvrée (10).

12. Procédé selon la revendication 11, comprenant :
- fourniture d'un élément de cadre (50),
- disposition de l'élément de cadre (50) sur la pièce ouvrée (10), et
- rabattement du deuxième composant (42) autour du deuxième axe (A2) et ainsi formation de la deuxième cavité (22) entre le premier composant (41), le deuxième composant (42), la pièce ouvrée (10) et l'élément de cadre (50).

13. Procédé selon l'une des revendications 7 à 12, dans lequel l'introduction de matériau dans la première et/ou la deuxième cavité (21, 22) comprend :
formation de la première et/ou d'une deuxième pièce moulée en matière plastique (25, 26) sous la forme d'un enrobage par moussage (7) circonférentiel.

14. Procédé selon l'une des revendications 7 à 13, comprenant : disposition d'un élément rapporté (52) sur la pièce ouvrée (10) au moyen d'un processus de collage.

15. Procédé selon l'une des revendications 7 à 14, comprenant : ouverture de l'élément rabattant (40) autour du premier axe (A1) ou autour du premier et du deuxième axe (A1, A2), de sorte que la pièce ouvrée (10) peut être prélevée hors de l'outil inférieur (30).
